# EUROPÄISCHE PATENTSCHRIFT

(11) **EP 2 835 326 B1**
(45) Veröffentlichungstag und Bekanntmachung des Hinweises auf die Patenterteilung: **27.04.2016**
(21) Anmeldenummer: 14002641.0
(22) Anmeldetag: 29.07.2014
(51) Int. Cl.: B65G 1/137

(54) **Kommissioniersystem mit koppelbaren auf einem Kommissionierfahrzeug Lagermodulen und Zugriffsüberwachungs- und Ortungsvorrichtungen**
Picking system equiped with connectable storing modules, access detection and position sensors
Système de préparation de commande équipé de modules de stockage amovibles, d'un dispositif de détection d'accès et d'un capteur de position

(30) Priorität: 05.08.2013 DE 102013012908
(43) Veröffentlichungstag der Anmeldung: 11.02.2015
(73) Patentinhaber: Safelog GmbH, 85551 Kirchheim bei München (DE)
(72) Erfinder: Wolter, Michael, 83567 Unterreit (DE)
(74) Vertreter: Grättinger Möhring von Poschinger Patentanwälte Partnerschaft

(56) Entgegenhaltungen:
- EP-B1- 0 994 761
- DE-A1- 3 632 448
- DE-A1- 4 413 897
- DE-A1- 10 360 791
- DE-A1-102011 051 330
- JP-A- S6 175 707
- JP-A- H01 127 507
- JP-A- H01 127 508
- JP-A- H01 127 509
- JP-A- S63 267 604
- JP-A- 2001 187 607
- JP-A- 2006 248 746
- JP-U- S51 148 182

## Beschreibung

Die Erfindung betrifft ein Kommissioniersystem umfassend wenigstens ein Regal mit einer Mehrzahl von Fächern zur Aufnahme von Kommissioniergut, wobei auf die Fächer von einer Regalfront des Regals aus zugegriffen werden kann; und wenigstens einen zu Kommissionierzwecken entlang der Regalfront verfahrbaren Kommissionierwagen mit einer Plattform, welche dem Aufenthalt eines Kommissionierers dient und von welcher aus ein Zugriff auf Fächer des wenigstens einen Regals möglich ist, wobei das Kommissioniersystem eine Ortungsvorrichtung zur Bestimmung der aktuellen Position des Kommissionierwagens relativ zum Regal aufweist, und wobei wenigstens ein Modul mit einer Mehrzahl von Modul-Fächern zur Aufnahme von Kommissioniergut mit dem die Plattform aufweisen Kommissionierwagen koppelbar ist, wobei auf die Modul-Fächer durch einen auf der Plattform stehenden Kommissionierer von einer Modul-Front aus zugegriffen werden kann.

Derartige Kommissioniersysteme sind aus dem Stand der Technik und besonders aus dem Dokument JPS6175707 bekannt und dienen dazu, Kommissioniervorgänge zu vereinfachen sowie Zeit und Kosten im Zusammenhang mit Kommissioniervorgängen einzusparen.

Im Zuge eines Kommissioniervorgangs kann in bzw. aus den Fächern des Regals Kommissioniergut, beispielsweise Behältnisse oder lose Gegenstände, ein- bzw. ausgelagert werden. Die Ein- und Auslagerung wird durch den Kommissionierer vorgenommen, welcher sich auf der Plattform des Kommissionierwagens aufhalten und sich mit dem Kommissionierfahrzeug entlang der Regalfront fortbewegen kann. Dabei ist der Kommissionierwagen typischerweise entweder entlang einer Regalfront eines einzigen Regals oder aber zwischen zwei eine Lagergasse bildenden, gegenüberliegenden Regalfronten zweier Regale verfahrbar. Weiterhin ist es auch möglich, dass der Kommissionierwagen innerhalb eines Lagers längs der Regalfronten verschiedener Regale bzw. zwischen verschiedenen Lagergassen eines größeren Regalsystems verfahrbar ist. Aus einem bestimmten Fach des Regals auszulagerndes Kommissioniergut kann der Kommissionierer in dem Kommissionierfahrzeug - üblicherweise in eine jeweils dafür vorgesehene Aufnahme des Kommissionierwagens bzw. ein hierfür im Kommissionierwagen vorgesehenes Fach - verstauen. In ein Fach des Regals einzulagerndes Kommissioniergut kann aus der entsprechenden Aufnahme bzw. dem Fach des Kommissionierwagens entnommen werden.

Um Fehler im Zusammenhang mit vorgeplanten Kommissioniervorgängen weiter zu verringern besteht insbesondere das Bedürfnis, ein Kommissioniersystem bereitzustellen, welches erkennen kann, auf welches Fach eines Regals während eines Kommissioniervorgangs zugegriffen wird.

Aus der EP 0 994 761 B1 ist dazu ein Regal mit einer Mehrzahl von Fächern bekannt, auf welche ein Kommissionierer jeweils von der Regalfront aus über Zugriffsöffnungen zugreifen kann. Es ist eine Meldeeinrichtung vorgesehen, welche einen bevorzugt am oberen Rand des Regals angeordneten optischen Distanzscanner aufweist, wobei ein Messbereich des Distanzscanners sich über eine Mehrzahl der Zugriffsöffnungen erstreckt. Die Meldeeinrichtung kann ermitteln, an welcher Stelle ein Fremdkörper (z.B. ein Arm des Kommissionierers) in den Messbereich des Distanzscanners eingedrungen ist (Zugriffs-Koordinaten). Auf einer Speichereinheit sind die Koordinaten bzw. der Koordinatenbereich der Zugriffsöffnungen der überwachten Fächer gespeichert (Fächer-Koordinaten). Durch einen Vergleich der Zugriffs-Koordinaten mit den Fächer-Koordinaten erlaubt die Meldeeinrichtung gemäß der EP 0 994 761 B1 bereits die Erkennung, in welches Fach des Regals eingegriffen worden ist. Dabei muss jedoch an jedem Regal eines Lagers jeweils (wenigstens eine) Meldeeinrichtung installiert werden, um die Gesamtheit der Fächer der in dem Lager vorgesehenen Regale zu überwachen. Bereits bei größeren Regalen ist dabei aufgrund des begrenzten Messbereichs des optischen Distanzscanners zur vollständigen Überwachung eines Regals ggfs. eine Mehrzahl an Distanzscannern vorzusehen.

Weiterhin ist aus der DE 103 60 791 A1 ein Lagersystem mit mindestens einem Kommissionierfahrzeug bekannt, bei welchem eine Positionserfassungseinrichtung zur Bestimmung der Position des Kommissionierfahrzeugs und am Kommissionierfahrzeug wenigstens ein Distanzscanner zur Überwachung von Zugriffen auf ein dem Kommissionierfahrzeug benachbartes Regal vorgesehen ist. Das Kommissionierfahrzeug weist eine Mehrzahl an Aufnahmebehältnissen zur Aufnahme der zu kommissionierenden Gegenstände auf, die ggfs. lageveränderbar montiert sein können. Eine besonders flexible Gestaltung des Kommissionierfahrzeugs im Hinblick auf die Anordnung der Aufnahmebehältnisse ist hiermit nicht möglich. Ferner ist dort keine Vorrichtung vorgesehen, mit der die korrekte Ablage der aus dem Regal entnommenen Gegenstände in ein spezifisches Aufnahmebehältnis überwacht werden könnte.

Aus der DE 36 32 448 A1 ist außerdem ein Kommissionierwagen mit einer Mehrzahl an Behältern und mit einer Standfläche für den Kommissionierer bekannt, wobei dort im Bereich der Behälter jeweils eine z.B. als Videokamera ausgestaltete optische Kontrolleinrichtung zur Kontrolle des Inhalts des jeweiligen Behälters und eine Wägeeinrichtung zur Bestimmung des Gewichts des jeweiligen Behälters vorgesehen sind.

Schließlich zeigt noch die DE 10 2011 051 330 A1 einen an einen Kommissionierwagen koppelbaren Andockwagen mit daran vorgesehenen Sensoren und/oder Anzeigemitteln. Ein eine Plattform für den Kommissionierer aufweisender Kommissionierwagen ist darin ebensowenig gezeigt wie Mittel zur Überwachung des Zugriffs auf ein fest installiertes Regal.

Die Aufgabe der vorliegenden Erfindung ist es daher, ein möglichst einfach aufgebautes Kommissioniersystem der eingangs genannten Art bereitzustellen, welches sich bei möglichst optimaler Überwachung von Kommissioniervorgängen mit möglichst geringem apparativen Aufwand und in möglichst flexibler Weise an verschiedenste Lagersituationen anpassen lässt.

Diese Aufgabe wird gelöst mit einem Kommissioniersystem nach Anspruch 1.

Das erfindungsgemäße Kommissioniersystem ist neben den eingangs erwähnten Merkmalen unter anderem dadurch gekennzeichnet, dass am Kommissionierwagen eine Zugriffsüberwachungseinrichtung zur Ermittlung eines von der Plattform aus erfolgenden Zugriffs auf ein Fach des dem Kommissionierwagen benachbarten Regals vorgesehen ist, welche wenigstens einen optischen Distanzscanner aufweist, der derart (am Kommissionierwagen) montiert ist, dass sich sein Überwachungsbereich bei geeignet vor der Regalfront positioniertem Kommissionierwagen im Wesentlichen parallel zur Regalfront erstreckt, wobei die Zugriffsüberwachungsvorrichtung dazu eingerichtet ist, aus der relativ zum Distanzscanner ermittelten Position eines Eingriffs in den Überwachungsbereich und aus der mittels der Ortungsvorrichtung ermittelten Position des Kommissionierwagens relativ zum Regal zu berechnen, auf welches Fach des Regals ein Zugriff erfolgt.
Mit anderen Worten: Die Zugriffsüberwachungsvorrichtung des erfindungsgemäßen Kommissioniersystems ist dazu eingerichtet, einen in den Überwachungsbereich des an dem Kommissionierfahrzeug montierten und mit diesem verfahrbaren Distanzscanners eindringenden Fremdkörper als Zugriff auf ein bestimmtes Fach des Regals zu detektieren. Dabei kann die Zugriffsüberwachungsvorrichtung aus der Relativposition des Fremdkörpers im Überwachungsbereich zum Distanzscanner sowie der durch die Ortungsvorrichtung ermittelten Relativposition des Kommissionierfahrzeugs zu einem Regal berechnen, an welcher Position der Regalfront der Eingriff erfolgt ist und somit (bei Kenntnis der Fächer-Koordinaten des Regals) ermitteln, auf welches Fach des Regals zugegriffen worden ist.

Das erfindungsgemäße Kommissioniersystem kann somit unter Verwendung einer Ortungsvorrichtung und einer lediglich am Kommissionierwagen zu installierenden Zugriffsüberwachungsvorrichtung mit optischem Distanzscanner die vollständige Überwachung eines gesamten Regals bzw. mehrerer Regale sicherstellen. Ermöglicht wird dies dadurch, dass das erfindungsgemäße Kommissioniersystem einen mit dem Kommissionierwagen mitfahrenden Distanzscanner bereitstellt, dessen Überwachungsbereich sich stets direkt vor der Plattform des Kommissionierwagens entlang der Regalfront eines hierzu benachbarten Regals erstreckt.

Unter Verwendung eines erfindungsgemäßen Kommissioniersystems werden in der Regel mehrere nacheinander zu tätigende Kommissioniervorgänge vorgeplant. Um diese Kommissioniervorgänge wie vorgeplant ausführen zu können, benötigt der Kommissionierer Informationen darüber, welche Kommissioniervorgänge er in welcher Reihenfolge durchzuführen hat, das heißt ihm muss auf geeignete Weise mitgeteilt werden, in welcher Reihenfolge er jeweils welches Kommissioniergut in welcher Menge in ein bestimmtes Fach des Regal einlagern bzw. aus diesem auslagern soll. Diese Informationen werden dem Kommissionierer durch hierfür geeignete Anzeigemittel mitgeteilt, wobei es sich bei den Anzeigemitteln z.B. um ein am Kommissionierwagen montiertes Display und/oder um z.B. das jeweilige Fach optisch kennzeichnende Fachanzeigen bzw. das Fach z.B. vom Kommissionierwagen aus anleuchtende Leuchtelemente handeln kann.

Ein durch die Zugriffsüberwachungsvorrichtung festgestellter Zugriff auf ein bestimmtes Fach des Regals kann somit unter Verwendung eines erfindungsgemäßen Kommissioniersystems mit einem planmäßig vorgesehenen Zugriff auf ein vorgegebenes Fach des Regals verglichen werden. Fand dabei der mittels der Zugriffsüberwachungsvorrichtung ermittelte Zugriff auf ein falsches Fach des Regals statt, so kann dem Kommissionierer durch dazu geeignete Mittel, z.B. ein optisches und/oder akustisches Signal, signalisiert werden, dass ein Fehlzugriff erfolgt ist. Stimmt indessen das Fach des festgestellten Zugriffs mit dem für den auszuführenden Kommissioniervorgang vorgegebenen Fach überein, so kann der gegebene Zugriff auf das richtige Fach zur Quittierung der korrekten Ausführung des Kommissioniervorgangs genutzt werden, wobei auch hier z.B. ein geeignetes Bestätigungssignal für den Kommissionierer erzeugt werden kann.

Als Ortungsvorrichtung können in dem erfindungsgemäßen Kommissioniersystem beispielsweise optische Ortungssysteme zum Einsatz kommen, welche eine hinreichend genaue Bestimmung der aktuellen Relativposition des Kommissionierwagens zu dem Regal ermöglichen. Wichtig ist dabei, dass die Ortungsmessgenauigkeit unter Berücksichtigung der Größe der Fächer des Regals ausreichend hoch ist, um eindeutig bestimmen zu können, in welches Fach eingegriffen wird. Die Ortungsvorrichtung ist dazu eingerichtet, die Position des Kommissionierfahrzeugs und damit auch des Distanzscanners relativ zum Regal repräsentierende Positionsdaten zu generieren und der Zugriffsüberwachungsvorrichtung bzw. einer die detektierten Zugriffe auswertenden Steuer- bzw. Auswerteeinheit zur weiteren Verarbeitung zur Verfügung zu stellen.

Die Zugriffsüberwachungsvorrichtung umfasst wenigstens einen optischen Distanzscanner, wobei es zweckmäßig sein kann - sofern vorgesehen ist, dass Kommissioniervorgänge zu verschiedenen Seiten der Plattform des Kommissionierwagens erfolgen sollen (z.B. weil der Kommissionierwagen in einer Lagergasse verfährt und Kommissioniervorgänge zu beiden die Lagergasse begrenzenden Regalen durchgeführt werden sollen) -, jeweils einen Distanzscanner für die zu verschiedenen Seiten erfolgenden Kommissioniervorgänge vorzusehen. Jeder Distanzscanner ist hierzu an einem geeigneten Ort montiert, von welchem aus sich der Überwachungsbereich des Distanzscanners im Wesentlichen parallel zu einer Seite der Plattform des Kommissionierwagens und bei geeigneter Positionierung des Kommissionierwagens vor der Regalfront parallel zu dieser erstreckt. Dabei ist die Gewährleistung eines besonders geringen Abstands zwischen dem Überwachungsbereich und der dem Kommissionierwagen benachbarten Regalfront von Vorteil, weil dadurch mit besonders hoher Zuverlässigkeit eine korrekte Zuordnung zwischen einem detektierten und georteten Eingriff in den Überwachungsbereich und dem hierbei erfolgenden Zugriff auf ein bestimmtes Fach des Regals möglich ist.

Der Distanzscanner ist dazu eingerichtet zu ermitteln, ob und wo ein Fremdkörper, beispielsweise ein Kommissioniergut, die Hand oder der Arm des Kommissionierers in seinen Überwachungsbereich eingreift, betreffende Zugriffs-Koordinaten als Datensatz zu generieren und der Zugriffsüberwachungsvorrichtung bzw. einer Steuer-/ Auswerteeinheit des Kommissioniersystems zur Verfügung zu stellen. Diese Steuer-/Auswerteeinheit kann am Kommissionierwagen selbst angeordnet sein und z.B. über ein Bussystem mit dem jeweiligen Distanzscanner bzw. der jeweiligen Zugriffsüberwachungsvorrichtung kommunizieren. Ferner kann auch eine Kommunikationsschnittstelle zur Kommunikation mit einer (externen) Steuereinheit des Kommissioniersystems vorgesehen sein, welche z.B. die Daten für die vom Kommissionierer auszuführenden Kommissioniervorgänge vorgibt.

Ersichtlich ist im Rahmen der vorliegenden Erfindung dafür Sorge zu tragen, dass die Zugriffsüberwachungsvorrichtung bzw. die Auswerte-/Steuereinheit auf in einer Speichereinheit des Systems hinterlegte Daten zugreifen kann, welche die jeweilige Lage bzw. die Erstreckung der (Zugriffsöffnungen der) Fächer des wenigstens einen Regals innerhalb der Regalfront repräsentieren (Fächer-Koordinaten). Im Rahmen der Inbetriebnahme des erfindungsgemäßen Systems sind somit die Fächer-Koordinaten auf geeignete Weise zu erfassen und abzuspeichern.

Es bietet sich an, den wenigstens einen Distanzscanner seitlich an dem Kommissionierfahrzeug im Bereich bzw. oberhalb eines Rands der Plattform zu montieren, weil von dort aus der Zugriff auf das Regal erfolgt und somit besonders gut detektiert und geortet werden kann. Weiterhin kann sich der Überwachungsbereich hierdurch in vorteilhafter Weise zwischen der Plattform des Kommissionierwagens und der hierzu benachbarten Regalfront erstrecken.

Besonders bevorzugt ist in diesem Zusammenhang gemäß einer ersten Weiterbildung des erfindungsgemäßen Kommissioniersystems vorgesehen, dass der Distanzscanner im oberen Bereich des Kommissionierwagens oberhalb der Plattform angeordnet ist. Diese Position eignet sich besonders gut zur Erzeugung eines Überwachungsbereichs, der den gesamten von der Plattform des Kommissionierwagens aus erreichbaren Teil der Regalfront abdeckt.

Die Ortungsvorrichtung weist gemäß einer weiteren bevorzugten Ausführungsform der Erfindung eine entlang eines vorgegebenen Fahrwegs für den Kommissionierwagen verlaufende Skala mit Ortsinformationen und eine an dem Kommissionierwagen angebrachte Auslesevorrichtung zum Auslesen der Skala auf. Die Skala kann bevorzugt durch Barcodes gebildet sein und die Auslesevorrichtung einen Barcodescanner umfassen. Mit einer derartigen Ortungsvorrichtung kann die Relativposition zwischen Kommissionierwagen und Regal besonders genau, bei der Variante mit Barcodes im Bereich von Zehntelmillimetern, bestimmt werden. Weiterhin ist eine Solche Ortungsvorrichtung besonders kostengünstig in bestehenden Lagern nachrüstbar, wobei die Skala entweder am Boden, an der Regalfront oder im Bereich einer den Kommissionierwagen führenden Schiene angeordnet sein kann.

Ferner ist im Rahmen der vorliegenden Erfindung vorgesehen, dass wenigstens ein Modul mit einer Mehrzahl von Modul-Fächern zur Aufnahme von Kommissioniergut mit dem die Plattform aufweisenden Kommissionierwagen koppelbar ist, wobei auf die Modul-Fächer durch einen auf der Plattform stehenden Kommissionierer von einer (zur Plattform weisenden) Modul-Front aus zugegriffen werden kann. Zur (lösbaren) Kopplung der Module an dem Kommissionierwagen sind am Kommissionierwagen bevorzugt geeignet angeordnete Arretiermittel vorgesehen. Die Modulfächer des Moduls bilden die eingangs erwähnten Aufnahmen bzw. Fächer des Kommissionierwagens für Kommissioniergut, wobei an dem Kommissionierwagen vorteilhaft verschiedene Module mit unterschiedlicher Fächereinteilung ankoppelbar sein können. Das Modul weist vorzugsweise Rollen oder Räder an seiner Unterseite auf, wodurch es eigenständig verfahrbar ist. Sofern ein Modul bestimmungsgemäß mit dem Kommissionierwagen gekoppelt ist, kann es - mit oder ohne Rollen - gemeinsam mit dem Kommissionierwagen verfahren werden. Das Modul bzw. die Module ist bzw. sind vorzugsweise im Frontbereich und/oder im Heckbereich des Kommissionierwagens ankoppelbar, insbesondere weil die Anordnung von Modulen in diesen Bereichen den Kommissionierer nicht bei seitlich zur Plattform erfolgenden Kommissioniervorgängen behindert.

Die Ermöglichung der Ankopplung unterschiedlicher Module an dem Kommissionierwagen erlaubt eine besonders flexible Anpassung der durch die Modul-Fächer gebildeten Aufnahmen/Fächer des Kommissionierwagens an unterschiedliche Kommissioniergüter.

Bei dem erfindungsgemäßen Kommissioniersystem ist ferner vorgesehen, dass am Kommissionierwagen wenigstens eine Modul- Zugriffsüberwachungseinrichtung mit wenigstens einem weiteren optischen Distanzscanner vorgesehen ist, dessen Modul-Überwachungsbereich sich im Wesentlichen parallel zur Modul-Front eines an dem Kommissionierwagen angekoppelten Moduls erstreckt, so dass ein von der Plattform aus erfolgender Zugriff auf ein bestimmtes Modul-Fach detektierbar und ortbar ist. Diese Ausgestaltung ist ähnlich aufgebaut und bietet ähnliche Vorteile wie die die Fächer eines Regals überwachende Zugriffsüberwachungsvorrichtung der bereits vorstehend beschriebenen Art. Entbehrlich ist in dieser Ausgestaltung selbstverständlich das Vorsehen einer weiteren Ortungsvorrichtung, weil der weitere Distanzscanner fest vor bzw. oberhalb der Modul-Front des Moduls am Kommissionierwagen montiert werden kann und die Relativlage eines an dem Kommissionierwagen angekoppelten Moduls hierzu fest vorgegeben ist. Die Modul-Zugriffsüberwachungseinrichtung ist dazu eingerichtet, einen die relative Position eines Fremdkörpers zu dem weiteren optischen Distanzscanner repräsentierenden Datensatz (Modul-Zugriffsposition) zu generieren und beispielsweise der Modul-Zugriffsüberwachungsvorrichtung oder einer Auswerte-/Steuereinheit des Kommissioniersystems zur weiteren Verarbeitung zur Verfügung zu stellen, so dass ein detektierter Zugriff auf das Modul im Rahmen der Zugriffsüberwachung mit den für das betreffende Modul geeignet abgespeicherten Modul-Fächer-Koordinaten zur Ermittlung des Modul-Fachs, auf welches zugegriffen wurde, abgeglichen werden kann.

Weiterhin kann vorgesehen sein, dass jedes Modul einen RFID-Transponder und der Kommissionierwagen ein mit dem RFID-Transponder kompatibles Lesegerät aufweist. Das Lesegerät kann somit erkennen, welches Modul bzw. welche Art von Modul sich in seiner unmittelbarer Nähe, beispielsweise an dem Kommissionierwagen angekoppelt, befindet. Hierdurch kann z.B. die Modul-Zugriffsüberwachungsvorrichtung bzw. die Auswerte-/Steuereinheit automatisch auf die dem betreffenden Modul zugeordneten und geeignet abgespeicherten Modul-Fächer-Koordinaten zugreifen, um beim Zugriff auf ein Modul durch den Kommissionierer zu ermitteln, auf welches Modul-Fach des Moduls der Zugriff erfolgt ist.

Der Kommissionierwagen kann ferner vorteilhaft mittels einer Antriebseinheit, welche typischerweise einen (Elektro-)Motor umfasst, verfahrbar sein. Weiterhin kann der Kommissionierwagen beispielsweise entlang der Regalfront an einer auf der Fahrbahn oder an einer Decke oberhalb des Kommissionierwagens angebrachten Schiene verfahrbar sein, wobei die zulässigen Fahrtrouten des Kommissionierwagens ggfs. auch durch andere Hilfsmittel, z.B. optische Markierungen am Boden, die von einem geeigneten Sensor (z.B. einer CCD-Kamera) ausgelesen werden können, vorgegeben sein können. Besonders bevorzugt wird die Fahrtroute des Kommissionierwagens vollautomatisch von einer zentralen Steuereinheit des Kommissioniersystems vorgegeben, das heißt der Kommissionierer muss keinerlei Einfluss auf die Fahrtroute des Kommissionierwagens nehmen. Hierdurch kann der Kommissionierwagen z.B. so gesteuert werden, dass er vollautomatisch an einer Position vor einem Regal hält, von welcher aus der Kommissionierer auf der Plattform Zugriff auf ein mit dem aktuell auszuführenden Kommissioniervorgang in Zusammenhang stehendes Regal-Fach hat. Auch eine freie Verfahrbarkeit des Kommissionierwagens durch den Kommissionierer könnte ggfs. vorgesehen sein.

Insbesondere zum Zwecke der Unfallverhütung ist vorgesehen, dass der Kommissionierwagen ferner eine Sicherheitseinrichtung mit wenigstens einem optischen Sensor aufweist, wobei sich der Kontrollbereich des wenigstens einen optischen Sensors im Wesentlichen parallel zu einer Seite des Kommissionierwagens und/oder parallel zu dem Fahrweg, auf welchem der Kommissionierwagen verfahrbar ist, erstreckt, womit Fremdkörper in dem Kontrollbereich detektierbar sind. Als optischer Sensor kann dabei ebenfalls ein Distanzscanner der vorstehend beschriebenen Art zum Einsatz kommen. Diese Ausführungsform dient insbesondere dazu festzustellen, ob sich Fremdkörper, insbesondere Gegenstände oder Körperteile, in dem Kontrollbereich befinden, welche durch ein Verfahren des Kommissionierfahrzeugs beschädigt bzw. verletzt werden könnten. Sofern ein Fremdkörper von der Sicherheitseinrichtung erkannt wird, kann vorteilhaft vorgesehen sein, dass die Antriebseinheit gesperrt bzw. gestoppt wird.

Dem erfindungsgemäßen Kommissioniersystem und all seinen vorstehend erläuterten Ausführungsformen ist gemeinsam, dass nahezu alle elektronischen Bauteile dem Kommissionierwagen zugeordnet bzw. an diesem montiert sind. Das erfindungsgemäße Kommissioniersystem mitsamt seinen vorteilhaften Ausführungsformen und Weiterbildungen kann somit im Vergleich zu aus dem Stand der Technik bekannten Lösungen besonders kostengünstig realisiert werden, weil insbesondere die kostenintensiven Komponenten nur an dem Kommissionierwagen anstatt mehrfach an dem bzw. den Regalen eines Lagers bzw. an den mit dem Kommissionierwagen koppelbaren Modulen vorgesehen sind. Weiterhin kann das erfindungsgemäße Kommissioniersystem auf besonders einfache Weise in bestehenden Lagern nachgerüstet werden und, insbesondere im Hinblick auf den Kommissionierwagen und die hieran ankoppelbaren Module, modular, flexibel und kostengünstig an verschiedenste Lagergestaltungen angepasst werden.

Nachfolgend wird ein Ausführungsbeispiel eines erfindungsgemäßen Kommissioniersystems anhand der Zeichnung näher erläutert. Dabei zeigt jeweils schematisch dargestellt
- Fig. 1: eine Draufsicht auf ein Ausführungsbeispiel des erfindungsgemäßen Kommissioniersystems mit einem Kommissionierwagen und zwei an dem Kommissionierwagen angekoppelten Modulen,
- Fig. 2: eine Draufsicht auf das Kommissioniersystem aus Fig. 1 mit von dem Kommissionierwagen abgekoppelten Modulen und
- Fig. 3: eine Seitenansicht auf den Kommissionierwagen aus Fig. 1.

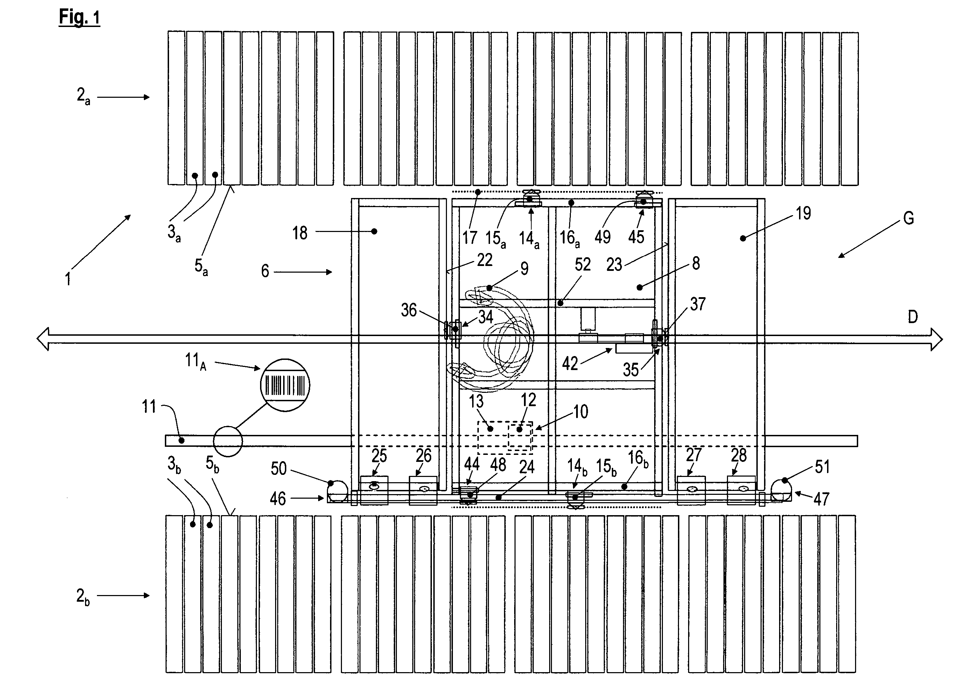

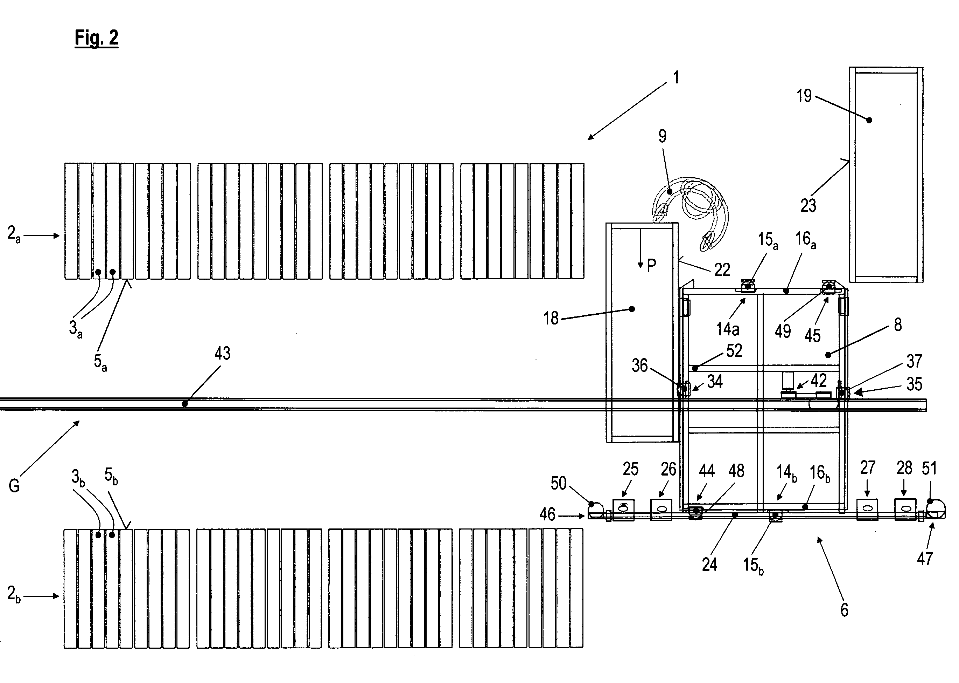

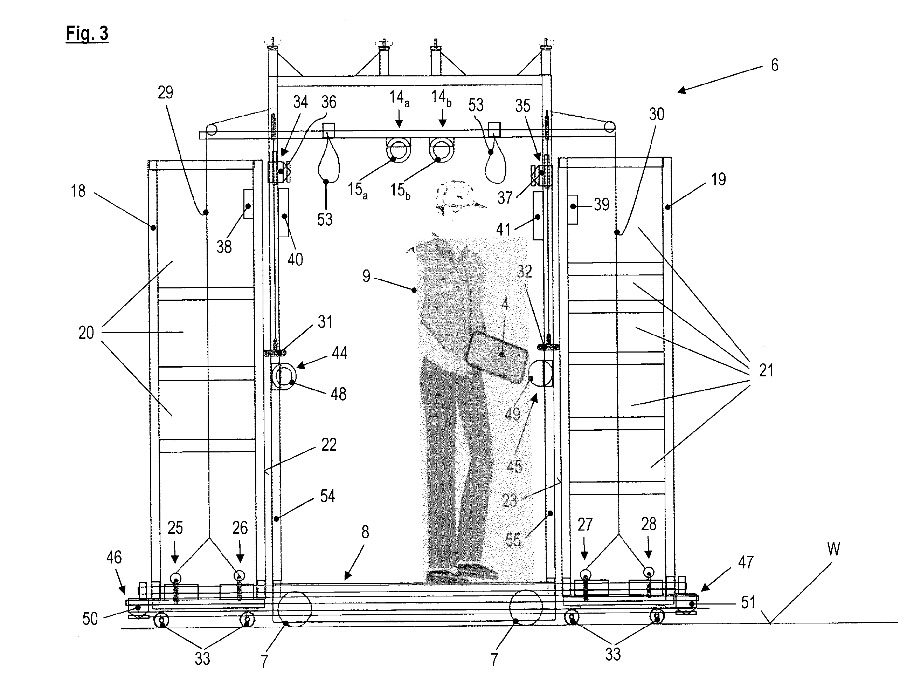

Das in Fig. 1 bis 3 dargestellte Ausführungsbeispiel eines erfindungsgemäßen Kommissioniersystems 1 umfasst ein System aus zwei zueinander parallelen Regalen 2ₐ, 2_{b}, welche jeweils eine Mehrzahl Fächern 3ₐ, 3_{b} aufweisen. In den Draufsichten der Fig. 1 und 2 ist jeweils die oberste Reihe von Fächern 3ₐ, 3_{b} der Regale 2ₐ, 2_{b} dargestellt, wobei die Regale 2ₐ, 2_{b} jeweils eine Mehrzahl solcher Reihen aufweisen. Die Fächer 3ₐ, 3_{b} der Regale 2ₐ, 2_{b} dienen dazu, z.B. ein in Fig. 3 dargestelltes Kommissioniergut 4 zur Einlagerung aufzunehmen. Die einander zugewandten Stirnseiten der Fächer 3ₐ, 3_{b} der beiden Regale 2ₐ, 2_{b} bilden jeweils eine im Wesentlichen ebene Regalfront 5ₐ, 5_{b} des jeweiligen Regals 2ₐ, 2_{b}. Von den Regalfronten 5ₐ, 5_{b} aus kann auf die einzelnen Fächer 3ₐ, 3_{b} zugegriffen werden, das heißt von den Regalfronten 5ₐ, 5_{b} aus kann Kommissioniergut 4 zu Kommissionierzwecken in die Fächer 3ₐ, 3_{b} eingelagert bzw. aus diesen ausgelagert werden.

Zum Zwecke der Durchführung einer Mehrzahl an hintereinander durchzuführenden Kommissioniervorgängen ist ein Kommissionierwagen 6 vorgesehen, welcher auf in Fig. 3 dargestellten Rädern 7 zwischen den parallelen Regalfronten 5ₐ, 5_{b} in einer Lagergasse G in Richtung des in Fig. 1 dargestellten Doppelpfeils D verfahrbar ist. Der Kommissionierwagen 6 umfasst eine Plattform 8, auf welcher sich ein Kommissionierer 9 aufhält, welcher von der geeignet vor einer Regalfront 5a, 5b positionierten Plattform 8 Zugriff auf die Fächer 3ₐ, 3_{b} der Regale 2ₐ, 2_{b} nehmen kann, das heißt Kommissioniergut 4 in die Fächer 3ₐ, 3_{b} einlagern und aus diesen auslagern kann.

Das Kommissioniersystem 1 umfasst weiterhin eine in Fig. 1 dargestellte Ortungsvorrichtung 10, mit welcher die aktuelle Position des Kommissionierwagens 6 relativ zu den Regalen 2ₐ, 2_{b} bestimmbar ist. Auf einem dem Kommissionierwagen 6 vorgegebenen und durch die Regale 2ₐ, 2_{b} seitlich begrenzten Fahrweg W ist eine Skala 11 mit Ortsinformationen in Form von quer zur Fahrtrichtung gemäß Doppelpfeil D des Kommissionierwagens 6 orientierten Barcodes angebracht, welche in Fig. 1 in dem vergrößerten Ausschnitt 11_{A} der Skala 11 beispielhaft dargestellt sind. Auf der dem Fahrweg W zugewandten, unteren Seite der Plattform 8 ist oberhalb und beabstandet zu der Skala 11 eine einen Barcodescanner 12 umfassende Auslesevorrichtung 13 angebracht. Der Barcodescanner 12 liest die Barcodes aus und die Auslesevorrichtung 13 ermittelt anhand der ausgelesenen Barcodes die Position des Kommissionierwagens 6 relativ zu den Regalen 2ₐ, 2_{b}. Die Auslesevorrichtung 13 generiert die ermittelte Position repräsentierende Daten (Positionsdaten) und übermittelt diese an zwei an dem Kommissionierwagen 6 angebrachte Zugriffsüberwachungseinrichtungen 14ₐ, 14_{b}.

Die auf gegenüberliegenden Seiten der Plattform 8 vorgesehenen Zugriffsüberwachungseinrichtungen 14ₐ, 14_{b} dienen der Überwachung des Zugriffs auf das ihnen jeweils zugewandte Regal 2ₐ, 2_{b} und sind dazu eingerichtet, einen von der Plattform 8 aus erfolgenden Zugriff auf ein Fach 3ₐ, 3_{b} zu detektieren und zu orten. Dazu weisen die Zugriffsüberwachungseinrichtungen 14ₐ, 14_{b} jeweils einen optischen Distanzscanner 15ₐ, 15_{b} auf, welcher bei der in Fig. 1 dargestellten Position des Kommissionierwagens 6 jeweils benachbart zu einer Regalfront 5ₐ, 5_{b} angeordnet und hierfür jeweils an einer im oberen Bereich des Kommissionierwagens 6 oberhalb der Plattform 8 angeordneten seitlichen Längstraverse 16ₐ, 16_{b} montiert ist. Die optischen Distanzscanner 15ₐ, 15_{b} erfassen jeweils einen im Wesentlichen ebenen Überwachungsbereich 17, welcher einen von der Plattform 6 aus zugänglichen Zugriffsbereich auf die Fächer 3ₐ, 3_{b} des benachbarten Regals 2ₐ, 2_{b} überdeckt, der sich parallel zur jeweiligen Regalfront 5ₐ, 5_{b} erstreckt.

Das Eindringen eines Fremdkörpers, z.B. einer Hand oder eines Arms des Kommissionierers 9 oder aber eines Kommissionierguts 4, in den Überwachungsbereich 17 wird durch den jeweiligen optischen Distanzscanner 15ₐ, 15_{b} detektiert. Der jeweilige optische Distanzscanner 15ₐ, 15_{b} ermittelt dabei, an welcher Position relativ zu ihm der Eingriff stattgefunden hat. Hieraus generiert die Zugriffsüberwachungsvorrichtung 14ₐ, 14_{b} einen diese Relativ-Position repräsentierenden Datensatz (Zugriffs-Koordinaten). Eine Auswerteeinheit kann sodann aus diesen Zugriffs-Koordinaten und den von der Ortungsvorrichtung 10 zeitgleich ermittelten Positionsdaten berechnen, an welcher Position der parallel zum Überwachungsbereich 17 angeordneten Regalfront 5ₐ, 5_{b} der detektierte Zugriff erfolgt ist. Die letztgenannte Position wird mit den geeignet gespeicherten Fächer-Koordinaten der Fächer 3ₐ, 3_{b} innerhalb der Ebene der betreffenden Regalfront 5ₐ, 5_{b} verglichen und somit ermittelt, auf welches konkrete Fach 3ₐ, 3_{b} des Regals 2ₐ, 2_{b} der Zugriff erfolgt ist.

Das Kommissioniersystem 1 weist ferner zwei Module 18, 19 mit einer in Fig. 3 dargestellten Mehrzahl von Modulfächern 20, 21 zur Aufnahme von Kommissioniergut 4 auf, wobei die Module 18, 19 im Bereich der Front und des Hecks des Kommissionierwagens 6 lösbar an diesen ankoppelbar sind. Vorliegend weisen die beiden Module 18, 19 eine unterschiedliche Fächereinteilung auf. In den Fig. 1 und 3 sind die Module 18, 19 an den Kommissionierwagen 6 angekoppelt, während in Fig. 2 das links dargestellte Modul 18 gerade durch den Kommissionierer 9 durch Verschieben des Moduls 18 gemäß Pfeil P an den Kommissionierwagen 6 angekoppelt wird und das rechts dargestellte Modul 19 noch beabstandet zu dem Kommissionierwagen 6 freistehend angeordnet ist.

Hierzu sind an einer Leiste 24 des Kommissionierwagens 6 Arretiermittel 25 bis 28 zur lagerechten Kopplung der Module 18, 19 an dem Kommissionierwagen 6 vorgesehen. Die Arretiermittel 25 bis 28 können jeweils über in Fig. 3 dargestellte Seilsysteme 29, 30 von der Plattform 8 aus durch den Kommissionierer 9 betätigt werden. Insbesondere kann der Kommissionierer 9 die Kopplung der Module 18, 19 mit dem Kommissionierwagen 6 durch Ziehen an Griffstücken 31, 32 der Seilsysteme 29, 30 lösen.

Ähnlich wie die Fächer 3ₐ, 3_{b} der Regale 2ₐ, 2_{b} bilden die der Plattform 8 zugewandten Stirnseiten der länglichen Modul-Fächer 20, 21 in ihrer Gesamtheit jeweils eine im Wesentlichen ebene Modul-Front 22, 23 des jeweiligen Moduls 18, 19, über die der Kommissionierer 9 - ähnlich wie auf die Fächer 3ₐ, 3_{b} der Regale 2ₐ, 2_{b} - auf die Modul-Fächer 20, 21 zugreifen kann. Die Module 18, 19 sind auf in Fig. 3 dargestellten Rädern 33 entweder alleine oder zusammen mit dem Kommissionierwagen 6 verfahrbar.

An dem Kommissionierwagen 6 sind weiterhin jeweils zwei Modul-Zugriffsüberwachungseinrichtungen 34, 35 mit jeweils einem weiteren optischen Distanzscanner 36, 37 angeordnet, mit welchen der Zugriff auf an dem Kommissionierwagen 6 angekoppelte Module 18, 19 überwachbar ist. Die hierfür vorgesehenen optischen Distanzscanner 36, 37 erzeugen einen im Wesentlichen zur Modul-Front 22, 23 der angekoppelten Module 18, 19 parallelen Modul-Überwachungsbereich. Analog zu den die Fächer 3ₐ, 3_{b} des Regals 2ₐ, 2_{b} überwachenden Zugriffsüberwachungseinrichtungen 14ₐ, 14_{b} detektieren und orten die Modul-Zugriffsüberwachungseinrichtungen 34, 35 das Eindringen von Fremdkörpern in den Modul-Überwachungsbereich und damit einen Zugriff auf ein Modul-Fach 20, 21 des Moduls 18, 19, wobei insoweit kein Rückgriff auf die mittels der Ortungsvorrichtung 10 ermittelten Positionsdaten erfolgen muss.

An den Modulen 18, 19 ist jeweils ein in Fig. 3 dargestellter RFID-Transponder 38, 39 und an dem Kommissionierwagen 5 mit den RFID-Transpondern 38, 39 kompatible Lesegeräte 40, 41 angebracht. Die Lesegeräte 40, 41 erkennen die in ihren Erfassungsbereichen befindlichen RFID-Transponder 38, 39 der Module 18, 19. Die Lesegeräte 40, 41 senden weiterhin die erkannten RFID-Transponder 38, 39 an eine nicht dargestellte, übergeordnete Steuereinheit, welche vergleicht, ob die erkannten RFID-Transponder 38, 39 mit den RFID-Transpondern der für den aktuellen Kommissioniervorgang vorgesehenen Module übereinstimmen und welche ferner die dem jeweiligen Modul 18, 19 zugeordneten Modul-Fächer-Koordinaten an die Modul-Zugriffsüberwachungsvorrichtung 34, 35 übermittelt.

Wie in Fig. 1 und 2 dargestellt, weist der Kommissionierwagen 6 eine einen Elektromotor umfassende Antriebseinheit 42 auf. Der zulässige Fahrweg für den Kommissionierwagen 6 wird durch eine oberhalb des Kommissionierwagens 6 und parallel zu den Regalfronten 5ₐ, 5_{b} angeordnete Schiene 43 vorgegeben (vgl. Fig. 2). Die Antriebseinheit 42 ist über eine Steuereinheit des Kommissioniersystems 1 steuerbar, sodass der Kommissionierwagen 6 vollautomatisch entlang der Regalfronten 5ₐ, 5_{b} verfahrbar ist.

Der Kommissionierwagen 6 weist ferner vier Sicherheitseinrichtungen 44 bis 47 mit jeweils einem optischen Sensor 48 bis 51 auf. Zwei Sicherheitseinrichtungen 44, 45 mit zugehörigen Sensoren 48, 49 sind jeweils an einer senkrechten Traverse 54, 55 des Kommissionierwagens 6 montiert und erzeugen einen sich im Wesentlichen parallel zu der offenen, der Regalfront 5ₐ, 5_{b} zugewandten Seite des Kommissionierwagens 6 erstreckenden Kontrollbereich. Zwei weitere Sicherheitseinrichtungen 46, 47 mit zugehörigen Sensoren 50, 51 sind an der Leiste 24 im Bereich der Front und des Hecks des Kommissionierwagens 6 montiert und erzeugen einen sich im Wesentlichen parallel zu dem Fahrweg W, auf welchem der Kommissionierwagen 6 verfahrbar ist, erstreckenden Kontrollbereich. Die Sensoren 48 bis 51 detektieren in ihrem jeweiligen Kontrollbereich eindringende Fremdkörper und melden dies an die Steuereinheit des Kommissioniersystems 1. Die Steuereinheit steuert sodann unter Berücksichtigung dieser Information die Antriebseinheit 42 des Kommissionierwagens 6, um etwaige Kollisionen des Kommissionierwagens 6 mit dem detektierten Fremdkörper zu verhindern

Schließlich sind, wie in Fig. 3 zu sehen ist, an einer im oberen Bereich des Kommissionierwagens 6 oberhalb der Plattform 8 angeordneten Längstraverse 52 Halteschlaufen 53 befestigt, an welchen sich der Kommissionierer 9, insbesondere während des Verfahrens des Kommissionierwagens 6, festhalten kann.

## Patentansprüche

1. Kommissioniersystem (1) umfassend wenigstens ein Regal (2ₐ, 2_{b}) mit einer Mehrzahl von Fächern (3ₐ, 3_{b}) zur Aufnahme von Kommissioniergut (4), wobei auf die Fächer (3ₐ, 3_{b}) von einer Regalfront (5ₐ, 5_{b}) des Regals (2ₐ, 2_{b}) aus zugegriffen werden kann, und wenigstens einen zu Kommissionierzwecken entlang der Regalfront (5ₐ, 5_{b}) verfahrbaren Kommissionierwagen (6) mit einer Plattform (8), welche dem Aufenthalt eines Kommissionierers (9) dient und von welcher aus ein Zugriff auf Fächer (3ₐ, 3_{b}) des wenigstens einen Regals (2ₐ, 2_{b}) möglich is t, wobei dass das Kommissioniersystem (1) eine Ortungsvorrichtung (10) zur Bestimmung der aktuellen Position des Kommissionierwagens (6) relativ zum Regal (2ₐ, 2_{b}) aufweist und wobei wenigstens ein Modul (18, 19) mit einer Mehrzahl von Modul-Fächern (20,21)zur Aufnahme von Kommissioniergut (4) mit dem die Plattform (8) aufweisen Kommissionierwagen (6) koppelbar ist, wobei auf die Modul-Fächer (20, 21) durch einen auf der Plattform (8) stehenden Kommissionierer (9) von einer Modul-Front (22, 23) aus zugegriffen werden kann, **dadurch gekennzeichnet, dass** am Kommissionierwagen (6) eine Zugriffsüberwachungseinrichtung (14ₐ, 14_{b}) zur Ermittlung eines von der Plattform (8) aus erfolgenden Zugriffs auf ein Fach (3ₐ, 3_{b}) des dem Kommissionierwagen (6) benachbarten Regals (2ₐ, 2_{b}) vorgesehen ist, welche wenigstens einen optischen Distanzscanner (15ₐ, 15_{b}) aufweist, der derart montiert ist, dass sich sein Überwachungsbereich (17) bei geeignet vor der Regalfront (5ₐ, 5_{b}) positioniertem Kommissionierwagen (6) im Wesentlichen parallel zur Regalfront (5ₐ, 5_{b}) erstreckt, wobei die Zugriffsüberwachungsvorrichtung (14ₐ, 14_{b}) dazu eingerichtet ist, aus der relativ zum Distanzscanner (15ₐ, 15_{b}) ermittelten Position eines Eingriffs in den Überwachungsbereich (17) und aus der mittels der Ortungsvorrichtung (10) ermittelten Position des Kommissionierwagens (6) relativ zum Regal (2ₐ, 2_{b}) zu berechnen, auf welches Fach (3ₐ, 3_{b}) des Regals (2ₐ, 2_{b}) ein Zugriff erfolgt, und dass am Kommissionierwagen (6) wenigstens eine Modul-Zugriffsüberwachungseinrichtung (34, 35) mit wenigstens einem weiteren optischen Distanzscanner (36, 37) vorgesehen ist, dessen Modul-Überwachungsbereich sich im Wesentlichen parallel zur Modul-Front (22, 23) eines an dem Kommissionierwagen (6) angekoppelten Moduls (18, 19) erstreckt, so dass ein von der Plattform (8) aus erfolgender Zugriff auf ein Modul-Fach (20, 21) detektierbar und ortbar ist.

2. Kommissioniersystem (1) nach Anspruch 1, **dadurch gekennzeichnet, dass** der Distanzscanner (15ₐ, 15_{b}) im oberen Bereich des Kommissionierwagens (6) oberhalb der Plattform (8) angeordnet ist.

3. Kommissioniersystem (1) nach Anspruch 1 oder 2, **dadurch gekennzeichnet, dass** die Ortungsvorrichtung (10) eine entlang eines vorgegebenen Fahrwegs (W) für den Kommissionierwagen (6) verlaufende Skala (11) mit Ortsinformationen und eine an dem Kommissionierwagen (6) angebrachte Auslesevorrichtung (13) zum Auslesen der Skala (11) aufweist.

4. Kommissioniersystem (1) nach Anspruch 3, **dadurch gekennzeichnet, dass** die Skala (11) durch Barcodes gebildet ist und die Auslesevorrichtung (13) einen Barcodescanner (12) umfasst.

5. Kommissioniersystem (1) nach einem der vorstehenden Ansprüche, **dadurch gekennzeichnet, dass** jedes Modul (18, 19) einen RFID-Transponder (38, 39) und der Kommissionierwagen (6) ein mit dem RFID-Transponder (38, 39) kompatibles Lesegerät (40, 41) aufweist.

6. Kommissioniersystem (1) nach einem der vorstehenden Ansprüche, **dadurch gekennzeichnet, dass** der Kommissionierwagen (6) mittels einer Antriebseinheit (42) verfahrbar ist.

7. Kommissioniersystem (1) nach einem der vorstehenden Ansprüche, **dadurch gekennzeichnet, dass** der Kommissionierwagen (6) eine Sicherheitseinrichtung (44 bis 47) mit wenigstens einem optischen Sensor (48 bis 51) aufweist, wobei sich der Kontrollbereich des wenigstens einen optischen Sensors (48 bis 51) im Wesentlichen parallel zu einer Seite des Kommissionierwagens (6) und/oder parallel zu dem Fahrweg (W), auf welchem der Kommissionierwagen (6) verfahrbar ist, erstreckt, womit Fremdkörper in dem Kontrollbereich detektierbar sind.

## Claims

1. An order picking system (1) comprising at least one shelf (2ₐ, 2_{b}) with a plurality of compartments (3ₐ, 3_{b}) for receiving picked goods (4), wherein the compartments (3ₐ, 3_{b}) can be accessed from a shelf front (5ₐ, 5_{b}) of the shelf (2ₐ, 2_{b}) and at least one picking cart (6) movable along the shelf front (5ₐ, 5_{b}) for picking purposes with a platform (8), on which a picker (9) resides and which allows access to compartments (3ₐ, 3_{b}) of the at least one shelf (2ₐ, 2_{b}), wherein the order picking system (1) comprises a location finding device (10) for determining the current position of the picking cart (6) relative to the shelf (2ₐ, 2_{b}), and wherein at least one module (18, 19) with a plurality of module compartments (20, 21) for receiving picked goods (4) can be coupled to the picking cart (6) provided with the platform (8), wherein the module compartments (20, 21) can be accessed from a module front (22, 23) by a picker (9) standing on the platform (8),
**characterised in that**
an access monitoring device (14ₐ, 14_{b}) is provided on the picking cart (6) for ascertaining that an access is taking place from the platform (8) to a compartment (3ₐ, 3_{b}) of the shelf (2ₐ, 2_{b}) adjacent to the picking cart (6), which monitoring device comprises at least one optical distance scanner (15ₐ, 15_{b}), which is mounted such that its monitoring area (17), provided the picking cart (6) is suitably positioned in front of the shelf front (5ₐ, 5_{b}), extends substantially in parallel to the shelf front (5ₐ, 5_{b}), wherein the access monitoring device (14ₐ, 14_{b}) is adapted to calculate, from the ascertained position relative to the distance scanner (15ₐ, 15_{b}) of an entrance into the monitoring area (17), and from the ascertained position of the picking cart (6) relative to the shelf (2ₐ, 2_{b}) ascertained by means of the location finding device (10), which compartments (3ₐ, 3_{b}) of the shelf (2ₐ, 2_{b}) is being accessed, and
**in that** at least one module access monitoring devices (34, 35) with at least one further optical distance scanner (36, 37) is provided on the picking cart (6), the module monitoring area of which extends substantially in parallel to the module front (22, 23) of a module (18, 19) coupled to the picking cart (6), thus allowing an access from the platform (8) to a module compartment (20, 21) to be detected and located.

2. The order picking system (1) according to claim 1, **characterised in that** the distance scanner (15ₐ, 15_{b}) is disposed in the upper area of the picking cart (6) above the platform (8).

3. The order picking system (1) according to claim 1 or 2, **characterised in that** the location finding device (10) comprises a scale (11) with location information, which extends along a predefined driveway (W) for the picking cart (6), and a read-out device (13) attached to the picking cart (6) for reading the scale (11).

4. The order picking system (1) according to claim 3, **characterised in that** the scale (11) is formed from barcodes and the read-out device (13) comprises a barcode scanner (12).

5. The order picking system (1) according to one of the preceding claims, **characterised in that** each module (18, 19) has a RFID transponder (38, 39) and the picking cart (6) has a read-out device (40, 41) compatible with the RFID transponder (38, 39).

6. The order picking system (1) according to one of the preceding claims, **characterised in that** the picking cart (6) is movable by means of a drive unit (42).

7. The order picking system (1) according to one of the preceding claims, **characterised in that** the picking cart (6) comprises a safety device (44 to 47) with at least one optical scanner (48 to 51), wherein the checking area of the at least one optical sensor (48 to 51) extends substantially in parallel to one side of the picking cart (6) and/or in parallel to the driveway (W), on which the picking cart (6) is movable, so that foreign bodies can be detected in the checking area.

## Revendications

1. Système de préparation des commandes (1) comprenant au moins un rayonnage (2ₐ, 2_{b}) avec une multitude. de compartiments (3a, 3_{b}) pour recevoir la marchandise de préparation de commandes (4), pour lequel on peut accéder aux compartiments (3ₐ, 3_{b}) depuis une face avant de rayonnage (5ₐ, 5_{b}) du rayonnage (2ₐ, 2_{b}) et au moins un chariot de préparation de commandes (6) pouvant être déplacé à des fins de préparation de commandes le long de la face avant du rayonnage (5ₐ, 5_{b}) avec une plateforme (8), laquelle sert à la tenue du préparateur de commandes (9) et depuis laquelle un accès aux compartiments (3a, 3b) d'au moins un rayonnage (2ₐ, 2_{b}) est possible, pour lequel le système de préparation de commandes (1) comporte un dispositif de localisation (10) pour déterminer la position actuelle du chariot de préparation des commandes (6) par rapport au rayonnage (2ₐ, 2_{b}) et pour lequel au moins un module (18, 19) avec une pluralité de compartiments de module (20, 21) pour loger la marchandise de préparation de commandes (4) peut être couplé au chariot de préparation de commandes (6) comportant la plateforme (8), pour lequel un préparateur de commandes (9) se tenant sur la plateforme (8) peut avoir accès aux compartiments de module (20, 21) depuis une face avant de module (22, 23), **caractérisé en ce que** sur le chariot de préparation de commandes (6), un dispositif de contrôle d'accès (14ₐ, 14_{b}) est prévu pour déterminer un accès ayant lieu depuis la plateforme (8) à un compartiment (3ₐ, 3_{b}) du rayonnage (2ₐ, 2_{b}) voisin du chariot de préparation de commandes (6), qui comporte au moins un détecteur de distance optique (15ₐ, 15_{b}) qui est monté de telle manière que sa zone de contrôle (17) avec le chariot de préparation de commandes (6) positionné convenablement devant la face avant du rayonnage (5ₐ, 5_{b}) s'étend pour l'essentiel parallèlement à la face avant du rayonnage (5ₐ, 5_{b}), pour lequel le dispositif de contrôle d'accès (14ₐ, 14_{b}) est agencé de telle manière qu'on peut calculer à partir de la position déterminée par rapport au détecteur de distance (15ₐ, 15_{b}) d'une intervention dans la zone de contrôle (17) et à partir de la position du chariot de préparation de commandes (6) déterminée au moyen du dispositif de localisation (10) par rapport au rayonnage (2ₐ, 2_{b}), à quel compartiment (3ₐ, 3_{b}) du rayonnage (2ₐ, 2_{b}) un accès a lieu, et
**en ce que** sur le chariot de préparation de commandes (6) au moins un dispositif de contrôle d'accès de module (34, 35) est prévu avec au moins un autre détecteur de distance optique (36, 37), dont la zone de contrôle de module s'étend pour l'essentiel parallèlement à l'avant de module (22, 23) d'un module (18, 19) couplé au chariot de préparation de commandes (6) de manière qu'un accès ayant lieu depuis la plateforme (8) à un compartiment de module (20, 21) peut être détecté et localisé.

2. Système de préparation de commandes (1) selon la revendication 1 **caractérisé en ce que** le détecteur de distance (15a, 15b) est disposé dans la zone supérieure du chariot de préparation de commandes (6) au-dessus de la plateforme (8).

3. Système de préparation de commandes (1) selon la revendication 1 ou 2 **caractérisé en ce que** le dispositif de localisation (10) comporte une échelle (11) passant le long d'une trajectoire (W) préalablement définie pour le chariot de préparation de commandes (6) avec des informations de localisation et un dispositif de lecture (13) monté sur le chariot de préparation de commandes (6) pour lire l'échelle (11) .

4. Système de préparation de commandes (1) selon la revendication 3 **caractérisé en ce que** l'échelle (11) est formée par des codes à barres et le dispositif de lecture (13) comprend un lecteur de codes à barres (12).

5. Système de préparation de commandes (1) selon l'une quelconque des revendications précédentes **caractérisé en ce que** chaque module (18, 19) comporte un transpondeur d'identification par radiofréquence (RFID) (38, 39) et le chariot de préparation de commandes (6) un appareil de lecture (40, 41) compatible avec le transpondeur d'identification par radiofréquence (RFID) (38, 39).

6. Système de préparation de commandes (1) selon l'une quelconque des revendications précédentes **caractérisé en ce que** le chariot de préparation de commandes (6) peut être déplacé au moyen d'une unité d'entraînement (42).

7. Système de préparation de commandes (1) selon l'une quelconque des revendications précédentes **caractérisé en ce que** le chariot de préparation de commandes (6) comporte un système de sécurité (44 à 47) avec au moins un capteur optique (48 à 51), pour lequel la zone de contrôle d'au moins un capteur optique (48 à 51) s'étend pour l'essentiel parallèlement à un côté du chariot de préparation de commandes (6) et/ou parallèlement à la trajectoire (W) sur laquelle le chariot de préparation de commandes (6) peut être déplacé, des corps étrangers pouvant être de ce fait détectés dans la zone de contrôle.
